# EUROPÄISCHE PATENTSCHRIFT

(11) **EP 2 873 786 B1**
(45) Veröffentlichungstag und Bekanntmachung des Hinweises auf die Patenterteilung: **25.10.2017**
(21) Anmeldenummer: 14003859.7
(22) Anmeldetag: 17.11.2014
(51) Int. Cl.: E04H 12/08, B21C 37/12, B21C 37/15, F03D 13/20, F16L 9/16, F16L 9/18

(54) **DOPPELWANDIGES GROßROHR, VERWENDUNG UND VERFAHREN ZUR HERSTELLUNG EINES DOPPELWANDIGEN GROßROHRS**
Double-walled large pipe, use and method of manufacturing a double-walled large pipe
Grand tube à double paroi, utilisation et procédé de fabrication d'un grand tube à double paroi

(30) Priorität: 15.11.2013 DE 102013019046
(43) Veröffentlichungstag der Anmeldung: 20.05.2015
(73) Patentinhaber: SMS group GmbH, 40237 Düsseldorf (DE)
(72) Erfinder: Arnold, Roland, 88289 Waldburg (DE)
(74) Vertreter: Reuther, Martin

(56) Entgegenhaltungen:
- EP-A1- 0 127 248
- EP-A2- 0 074 482
- GB-A- 241 029
- GB-A- 2 433 453
- US-A- 3 746 050

## Beschreibung

Die Erfindung betrifft doppelwandige Großrohre mit jeweils wenigstens einem spiralgeschweißten Stahlrohr als Innenrohr und/oder als Außenrohr, wobei das spiralgeschweißte Stahlrohr ein aus einem dickwandigen warmgewalzten Stahlband, d.h. einem warmgewalzten Stahlband mit einer Dicke größer als 8mm, spiralgeschweißtes Rohr ist. Auch betrifft die Erfindung die Verwendung eines doppelwandigen Großrohres, insbesondere eines spiralgeschweißten Stahlgroßrohres. Die Erfindung betrifft auch ein Verfahren zur Herstellung eines doppelwandigen Großrohres, wobei zunächst ein Rohr aus einem dickwandigen warmgewalzten Stahlband, d.h. einem warmgewalzten Stahlband mit eine Dicke größer als 8mm, spiralgeschweißt wird, anschließend dieses Rohr und ein weiteres Rohr mit einem anderen Durchmesser ineinander gesteckt und hiernach die beiden Rohre verbunden werden.

Ein derartiges Großrohr ist beispielsweise aus der DE 31 35 966 C2 bekannt, wobei es sich bei einem Großrohr typischer Weise um ein Rohr handelt, dessen Durchmesser weit über 1 m groß ist. Auch die EP 0 127 248 A1 offenbart, abgesehen von der Dicke des Stahlbandes, ein entsprechendes Großrohr.

Ein nicht gattungsgemäßes Rohr ist z.B. aus der DE 29 39 551 A1 bekannt. Das in diesem Dokument offenbarte Rohr besteht aus schraubenförmig gewickeltem Bandmaterial mit einer Dicke von in der Regel 3 mm und umfasst zwei ineinander gesteckte Wickelfalzrohre aus dem Bandmaterial, welche unmittelbar an dem Wickelfalz miteinander verschweißt sind.

Weitere nicht gattungsgemäße Rohre, die ein Innenrohr und ein Außenrohr bzw. die wenigstens ein spiralgeschweißtes Stahlrohr umfassen, sind z.B. aus der EP 0 074 482 A2, DE 103 30 963 A1, der DE 186 95 39 U, der DE 1 944 256 C, der DE 21 12 202 B2, der DE 25 57 215 A1, der DE 28 15 477 A1, der DE 297 10 432 U1, der DE 299 08 561 U1, der DE 30 46 420 A1, der DE 31 24 845 A1, der DE 37 18 436 A1, der DE 693 703 A, der DE 884 086 B, der WO 2006/005323 A1 und der WO 2010/046762 A1 bekannt.

Ein ebenfalls nicht gattungsgemäßes Großrohr ist aus der US 3,746,050 bekannt, nach welcher zunächst dünnwandige Stahlbänder an ihren Kanten miteinander verschweißt und anschließend aus dem hierdurch bereitgestellten Sandwich-Stahlband durch Spiralschweißen mittels einer einzigen durchgehenden Schweißnaht ein Großrohr gefertigt wird, welches dann aufgrund der einzigen umlaufenden Schweißnaht als lediglich aus einen Rohr gebildetes spiralgeschweißtes Stahlrohr vorliegt.

Eine aus zwei ineinander angeordneten Rohren bestehende Gründung für Bauwerke offenbart die DE 103 30 963 A1, wobei hier jedoch die beiden Rohre nicht miteinander verbunden sind. Auch die DE 10 2011 054 567 A1 offenbart ein doppelwandiges Großrohr, bei welchem jedoch ebenfalls die beiden ineinander angeordneten Rohre nicht miteinander verbunden sind. In beiden dieser Fälle ist in dem Ringspalt zwischen den beiden Rohren ein Füllmaterial eingebracht.

Es ist Aufgabe vorliegender Erfindung ein Großrohr bereitzustellen, dessen Steifigkeit während der Herstellung flexibel einstellbar ist.

Die Aufgabe der Erfindung wird durch doppelwandige Großrohre und ein Verfahren zur Herstellung eines doppelwandigen Großrohrs mit den Merkmalen der unabhängigen Ansprüche gelöst. Weitere vorteilhafte Ausgestaltungen finden sich in den Unteransprüchen und der nachfolgenden Beschreibung.

So kann sich ein doppelwandiges Großrohr mit wenigstens einem spiralgeschweißten Stahlrohr als Innenrohr und/oder als Außenrohr, wobei das spiralgeschweißte Stahlrohr ein aus einem dickwandigen warmgewalzten Stahlband, d.h. einem warmgewalzten Stahlband mit einer Dicke größer als 8,0 mm, spiralgeschweißtes Rohr ist, dadurch auszeichnen, dass das Innenrohr und das Außenrohr über wenigstens eine Schweißverbindung miteinander verbunden sind, wobei wenigstens eine Schweißöffnung in dem Innenrohr und/oder dem Außenrohr vorgesehen ist.

Durch Verbinden des Innenrohrs und des Außenrohrs über wenigstens eine Schweißverbindung während der Herstellung des doppelwandigen Großrohrs kann die Steifigkeit bzw. Festigkeit des jeweiligen Großrohrs vorteilhaft während der Herstellung flexibel eingestellt werden. Denn im Unterschied zu dem aus der DE 31 35 966 C2 bekannten Großrohr, bei dem das Innenrohr und das Außenrohr nach dem ineinander stecken bzw. ineinander Fügen durch mechanisches Aufweiten des Innenrohrs miteinander vereinigt werden, kann insbesondere z.B. über die Art der Schweißverbindung und auch über die axiale Höhe bzw. axiale Position der Schweißverbindung die Steifigkeit bzw. Festigkeit des doppelwandigen Großrohrs bereits während der Herstellung vorteilhaft flexibel eingestellt werden. Auch bei der nicht gattungsgemäßen US 3,746,050 ist, nachdem einmal das Sandwich-Stahlband bereitgestellt ist, kein Spielraum mehr für eine Variierung der Steifigkeit bzw. Festigkeit, zumal diese Druckschrift auch lediglich ein spiralgeschweißtes Rohr mit nur einer durchgehenden Schweißnaht offenbart, so dass kein Außen- und Innenrohr mit den entsprechenden Vorzügen zu finden ist.

Die Herstellung der wenigstens einen Schweißverbindung bzw. der Schweißverbindungen wird erfindungsgemäß über wenigstens eine an dem Innenrohr oder an dem Außenrohr vorgesehene Schweißöffnung vorgenommen werden, welche sich durchgehend durch die Wandung des Innenrohrs erstreckt. Nach dem Einführen des Innenrohrs in das Außenrohr kann dann auf einfache und praktische Weise von dem Inneren des Innenrohrs heraus über die Schweißöffnung eine Schweißverbindung zwischen dem Innenrohr und dem Außenrohr hergestellt werden.

Besonders vorteilhaft weist die Schweißverbindung bzw. die wenigstens eine Schweißverbindung einen axialen Abstand zur axialen Höhe eines Endes der beiden Enden des Innenrohrs auf, der wenigstens dem 0,1 fachen der Länge des Innenrohrs und/oder der wenigstens dem zweifachen Abstand zwischen Innenrohr und Außenrohr entspricht. Durch Vorsehen von Schweißverbindungen mit einem derartigen axialen Abstand zur axialen Höhe eines Endes der beiden Enden des Innenrohrs kann insbesondere in den von den Enden beabstandeten Bereichen eine hohe Steifigkeit bzw. Festigkeit bereitgestellt werden. Vor allem kann durch geeignete Wahl dieses axialen Abstands sowie - je nach konkreten Erfordernissen - durch eine geeignete Wahl der Dichte der Schweißverbindungen die Steifigkeit während der Herstellung sehr flexibel eingestellt werden, wobei vorteilhaft die Steifigkeit auch wirksam an mechanische Anforderungen angepasst werden kann, die z.B. dadurch charakterisiert sein können, dass das doppelwandige Großrohr eine hinreichende Steifigkeit bzw. Festigkeit gegenüber einwirkenden Biegemomenten aufweist.

Es versteht sich, dass an den Enden ohne Weiteres ebenfalls Schweißverbindungen, beispielsweise auch zu Flanschen vorgesehen sein können, die entsprechend die Steifigkeit erhöhen, wobei es hier in der Regel sicherlich keiner besonderen Aufwendungen zum Bereitstellen der Schweißverbindungen bedarf, da diese von außen jeweils gut zugänglich sind und mithin einfach bereit gestellt werden können.

Insbesondere sind die Schweißverbindungen nicht darauf beschränkt, ausschließlich an den Enden des Innenrohrs positioniert zu sein, so dass besonders vorteilhaft neben etwaigen Schweißverbindungen an den Enden des Innenrohrs auf unterschiedlichen axialen Höhen mehrere Schweißverbindungen vorgesehen sein können. Über die Dichte bzw. die Anzahl der Schweißverbindungen auf unterschiedlichen Höhen kann die Festigkeit bzw. Steifigkeit bzw. Stabilität des doppelwandigen Großrohrs gezielt beeinflusst werden. So könnte beispielsweise bei einem doppelwandigen Großrohr, welches z.B. als Mast eines Windrades oder eines Piling-Rohres bzw. eines Brückenrohres zum Einsatz kommt, am unteren Bereich des Großrohrs die Anzahl der Schweißverbindungen pro axialer Längeneinheit größer gewählt sein als in oberen Bereichen des Großrohrs, da im unteren Bereich eine höhere Steifigkeit bzw. Festigkeit erforderlich ist.

Bei einer bevorzugten Ausführungsform ist wenigstens eine Schweißöffnung in dem Innenrohr vorgesehen, die vorzugsweise zwischen dem Inneren des Innenrohrs und dem zwischen Innenrohr und Außenrohr liegenden Raum abgedichtet ist. Wie bereits oben dargelegt kann über eine derartige Schweißöffnung auf einfache und praktische Weise eine Schweißverbindung zwischen dem Innenrohr und dem Außenrohr hergestellt werden. Die Schweißöffnung zwischen dem Inneren des Innenrohrs und dem zwischen Innenrohr und Außenrohr liegenden Raum abzudichten, bringt den Vorteil mit sich, dass dieser Raum bzw. Zwischenraum wirksam vor einem Eindringen korrosiver Medien bewahrt werden kann. Insbesondere Feuchtigkeit würde bei Eindringen in den Zwischenraum möglicherweise nachteilige korrosive Veränderungen an dem Innenrohr bzw. Außenrohr mit sich bringen.

Die Abdichtung der Schweißöffnung kann über ein beliebiges Abdichtungsmittel vorgenommen werden. So könnte die Schweißöffnung z.B. über einen Stopfen abgedichtet sein. Insbesondere kann die Abdichtung der Schweißöffnung besonders bevorzugt auch über eine die Schweißverbindung bildende Schweißnaht erfolgen, welche die Schweißöffnung dichtend verschließt. Eine Abdichtung über die Schweißnaht ist insbesondere dann auf einfache und praktische Weise realisierbar, wenn gemäß einer weiteren bevorzugten Ausführungsform das Innenrohr und das Außenrohr miteinander verschweißt sind. In diesem Fall kann dann die das Innenrohr und Außenrohr unmittelbar miteinander verbindende Schweißnaht zusätzlich die Schweißöffnung - also diejenige Öffnung, über welche die Verschweißung vorgenommen wird - dichtend verschließen. Durch Verschweißen des Innenrohrs mit dem Außenrohr kann vorteilhaft eine sehr stabile Verbindung zwischen Innenrohr und Außenrohr geschaffen werden, da durch das unmittelbare Verschweißen von Innenrohr und Außenrohr diese unmittelbar stoffschlüssig miteinander verbunden werden können.

Bei einer anderen Ausführungsform sind zwischen dem Innenrohr und dem Außenrohr eine Vielzahl an Abstandshaltern bzw. Stegen, vorzugsweise aus Stahl, angeordnet, die vorzugsweise sowohl mit dem Innenrohr als auch mit dem Außenrohr verschweißt sind.

Durch Vorsehen der Vielzahl an Abstandshaltern bzw. Stegen kann eine sehr feste bzw. steife Verbindung zwischen dem Innenrohr und dem Außenrohr realisiert werden, die sich insbesondere dadurch auszeichnet, dass sie durch geeignete Wahl der Länge der Abstandshalter an bestehende Außendurchmesser-Unterschiede zwischen Innenrohr und Außenrohr flexibel angepasst werden kann. Auch eine Schweißverbindung zwischen Innenrohr und Außenrohr über die Abstandshalter kann vorzugsweise über Schweißöffnungen in bzw. an dem Innenrohr, die eigens für die Abstandshalter vorgesehen sind, vorgenommen werden, und zwar derart, dass über eine jeweilige Schweißöffnung der jeweilige Abstandshalter mit dem Innenrohr bzw. dem Außenrohr verschweißt werden kann. Insbesondere kann durch Vorsehen einer derartigen Schweißöffnung die Schweißverbindung zwischen Innenrohr und Außenrohr auf einfache und praktische Weise vom Inneren des Innenrohrs heraus vorgenommen werden. Auch ist es ggf. ohne weiteres möglich, die Schweißöffnung, durch welche der Abstandhalter mit dem Innenrohr bzw. mit dem Außenrohr verschweißt wurde, mittels geeigneter Maßnahmen, wie sie beispielhaft vorstehend bereits aufgeführt wurden, zu verschließen.

Vorzugsweise sind sowohl das Innenrohr als auch das Außenrohr ein spiralgeschweißtes Stahlrohr. Durch Spiralschweißen lassen sich vorteilhaft auf einfache und praktische Weise aus einem dickwandigen warmgewalzten Stahlband dickwandige Rohre mit einer Dicke größer als 8,0 mm herstellen. Insofern ist ein doppelwandiges Großrohr, bei welchem sowohl das Innenrohr als auch das Außenrohr ein spiralgeschweißtes Stahlrohr ist, auf einfache und praktische Weise herstellbar.

Es versteht sich, dass ggf. auch Schweißöffnungen außen vorgesehen sein können, wobei dieses möglicherweise den Nachteil eine erhöhten Anfälligkeit gegen Korrosion bzw. erhöhte Aufwendungen für eine Abdichtung oder für einen Korrosionsschutz aufweist, da in der Regel das Außenrohr unmittelbar Witterungseinflüssen ausgesetzt sein wird.

Die Schweißöffnungen ermöglichen auch bei dickwandigen Rohren eine Schweißverbindung zwischen dem Innenrohr und dem Außenrohr ggf. unter Verwendung eines Abstandhalters, wenn die Schweißstelle nicht mehr von den axialen Enden her durch dem Zwischenraum zwischen Innenrohr und Außenrohr erreichbar ist. Durch die Dicke der dickwandigen Innen- und Außenrohre ist ein Durchschweißen, wie dieses bei dünnwandigen Blechen möglich ist, an sich in der Regel von vorneherein ausgeschlossen bzw. nur durch Erzeugen einer Schweißöffnung möglich. Anders sieht dieses bei der spiralförmigen, das Innenrohr bzw. das Außenrohr definierenden Schweißnaht aus, wie diese auch in der US 3,746,050 oder auch in der DE 31 35 966 C2 offenbart ist, die durchaus durchgeschweißt werden kann, da hier ja noch Kante an Kante bzw. Stoß an Stoß geschweißt wird.

Vorzugsweise können das Innenrohr und/oder das Außenrohr zumindest auf ihrer dem jeweils anderen Rohr zugewandten Seite gegen Rost behandelt sein, einhergehend mit dem Schaffen eines wirksamen Korrosionsschutzes insbesondere gegenüber ggf. eindringender Feuchtigkeit, was ggf. nach einem Verbauen der Rohre nicht mehr bzw. nur unter enormem Aufwand nachzuholen ist.

. Auch kann ein Füllmaterial - z.B. Beton - zwischen Innen- und Außenrohr vorgesehen sein. Durch Vorsehen eines Füllmaterials, insbesondere in Form von Beton, kann die Stabilität bzw. Steifigkeit des doppelwandigen Großrohres wesentlich verbessert und/oder ggf. auch korrosiven Einflüssen entgegen gewirkt werden. Eine Füllung kann ggf. auch Schall dämpfend oder Wärme dämmend wirken.

Eine sehr hohe Stabilität bzw. Steifigkeit des doppelwandigen Großrohrs kann vorteilhaft dadurch realisiert sein, dass das Innenrohr und das Außenrohr eine Wandstärke zwischen 10,0 mm und 30,0 mm aufweisen. Vorzugsweise liegt die Wandstärke über 10,0 mm bzw. 11,0 mm und sogar 12,0 mm. Die Wandstärke kann insbesondere unter 30,0 mm bzw. unter 28,0 mm und sogar unter 26,0 mm liegen. Durch Vorsehen dieser Wandstärken kann insbesondere die Zahl er ineinander anzuordnenden und miteinander zu verbindenden Rohre in Bezug auf die gewünschte Biegesteifigkeit und das Handling bei der Herstellung des doppelwandigen Großrohrs optimiert werden. Wie unmittelbar ersichtlich, schließen derartige Wandstärken die Ausbildung von Wickelfalzen, wie sie beispielsweise in der DE 29 39 551 A1 offenbart sind, unter den Gesichtspunkten der Wirtschaftlichkeit und der Größe des auszuformenden Falzes praktisch aus.

Ein doppelwandiges Großrohr mit wenigstens einem spiralgeschweißtem Stahlrohr als Innenrohr und/oder als Außenrohr, wobei das spiralgeschweißte Stahlrohr ein aus einem dickwandigen warmgewalzten Stahlband, d.h. einem warmgewalzten Stahlband mit einer Dicke größer als 8,0 mm, spiralgeschweißtes Stahlrohr ist, kann sich auch dadurch auszeichnen, dass außerhalb des Außenrohrs ein weiteres Außenrohr und/oder innerhalb des Innenrohrs ein weiteres Innenrohr angeordnet ist.

Durch Vorsehen des weiteren Außenrohrs bzw. des weiteren Innenrohrs kann die Steifigkeit bzw. Festigkeit des Großrohrs während der Herstellung sehr flexibel eingestellt werden. Insbesondere ist durch Variation der relativen Lage des weiteren Außenrohrs bzw. des weiteren Innenrohrs relativ zu dem Außenrohr bzw. dem Innenrohr eine sehr flexible Einstellung der Steifigkeit bzw. Festigkeit des Großrohrs möglich, ohne dass zu dicke Wandstärken der einzelnen Rohre notwendig werden.

Eine sehr flexible Einstellung der Steifigkeit bzw. Festigkeit eines Großrohres während der Herstellung desselben kann insbesondere auch durch ein doppelwandiges Großrohr mit wenigstens einem spiralgeschweißten Stahlrohr als Innenrohr und/oder als Außenrohr bereitgestellt werden, bei welchem das spiralgeschweißte Stahlrohr ein aus einem dickwandigen warmgewalzten Stahlband, d.h. einem warmgewalzten Stahlband mit einer Dicke größer als 8,0 mm, spiralgeschweißtes Stahlrohr ist und welches sich dadurch auszeichnet, dass das Innenrohr und das Außenrohr eine unterschiedliche axiale Länge aufweisen. Die sehr flexible Einstellung der Steifigkeit bzw. Festigkeit des Großrohrs während der Herstellung desselben wird also durch Vorsehen unterschiedlicher axialer Längen des Innenrohrs und Außenrohrs bzw. insbesondere durch Anpassung der Längenunterschiede zwischen dem Innenrohr und dem Außenrohr ermöglicht. Insbesondere kann auf diese Weise eine sehr wirksame Anpassung der Biegesteifigkeit bzw. Biegefestigkeit des Großrohrs an vorgegebene bzw. zu erwartende Biegebeanspruchungen des Großrohrs realisiert werden.

Es versteht sich, dass unterschiedliche axiale Längen auch bei der Verwendung mehrerer Innen- und Außenrohre zur Anwendung kommen können, insbesondere um beispielsweise ein sich in eine Richtung, vorzugsweis nach oben, verjüngendes Großrohr bereitzustellen.

In der Regel werden die Rohre des doppelwandigen Großrohres zylindrisch ausgebildet sein, da die Dicke und die sonstigen Abmessungen des verwendeten bzw. verwendbaren Stahlbandes Verformungen oder auch ungerade Kanten nicht wirtschaftlich bzw. mit vertretbarem Aufwand bereitzustellen sein werden. Andererseits ist dieses nicht ausgeschlossen, so dass auch entsprechende Großrohre, die sich zu einem Ende verjüngen, ggf. vorgesehen sein können.

Ein Verfahren zur Herstellung eines doppelwandigen Großrohrs, bei welchem zunächst ein Rohr aus einem dickwandigen warmgewalzten Stahlband, d.h. einem warmgewalzten Stahlband mit einer Dicke größer als 8,0 mm, spiralgeschweißt wird, anschließend dieses Rohr und ein weiteres Rohr mit einem anderen Durchmesser ineinander gesteckt und hiernach die beiden Rohre verbunden werden, zeichnet sich erfindungsgemäß dadurch aus, dass die beiden Rohre über eine Schweißverbindung miteinander verbunden werden und mit wenigstens einer Schweißöffnung in dem Innenrohr und/oder dem Außenrohr.

Bei diesem Verfahren kann infolge des Umstands, dass die beiden Rohre über eine Schweißverbindung miteinander verbunden werden, die Steifigkeit bzw. Festigkeit des Großrohrs bereits während der Herstellung mittels dieses Verfahrens - wie bereits oben dargelegt - vorteilhaft flexibel eingestellt werden.

Vorzugsweise werden die beiden Rohre, wie bereits vorstehend erläutert, miteinander verschweißt, bzw. unmittelbar miteinander verschweißt, wodurch eine sehr stabile unmittelbare stoffschlüssige Verbindung zwischen dem Innenrohr und dem Außenrohr geschaffen werden kann. Alternativ können Abstandhalter mit beiden Rohren verschweißt werden, um auf diese Weise die beiden Rohre mittelbar mittels einer Schweißverbindung zu verbinden.

Besonders bevorzugt wird die Schweißverbindung vom Inneren des Innenrohrs heraus durch Schweißöffnungen geschlossen. Über bzw. durch Schweißöffnungen, die in bzw. an dem Innenrohr vorgesehen sind und welche die Wandung des Innenrohrs durchsetzen, kann auf einfache und praktische Weise die jeweilige Schweißverbindung geschlossen bzw. hergestellt werden. Zum Herstellen bzw. Schließen der Schweißverbindung kann vorteilhaft mittels einer entsprechenden Schweißvorrichtung von dem Inneren des Innenrohrs heraus über bzw. durch die jeweilige Schweißöffnung die jeweilige Schweißverbindung zwischen dem Innenrohr und dem Außenrohr geschlossen bzw. hergestellt bzw. gebildet werden.

Ein wirksamer Korrosionsschutz kann an dem doppelwandigen Großrohr dadurch realisiert werden, dass vorzugsweise zumindest eines der Rohre vor dem Verbinden der Rohre, vorzugsweise vor dem Ineinanderstecken, an seiner dem anderen Rohr zugewandten Seite gegen Korrosion, wie beispielsweise Rost, geschützt wird. Das Schützen dieser zugewandten Seite gegen Rost kann z.B. durch Sandstrahlen, Beschichten und/oder Verzinken erfolgen. Ggf. erfolgt eine weitere Nachbehandlung durch die Schweißöffnungen hindurch, insbesondere auch nach dem Schweißen.

Insbesondere kann ein vorstehend beschriebenes doppelwandiges Großrohr besonders vorteilhaft für Windradtürme, Piling-Rohre und/oder Brückenrohre verwendet werden.

Ein spiralgeschweißtes Stahlgroßrohr, welches infolge der Spiralverschweißung auf einfache und praktische Weise auch mit großen Durchmessern und großen Wanddicken herstellbar ist, kann auch unabhängig von den übrigen Merkmalen vorliegender Erfindung besonders vorteilhaft für Windradtürme bzw. für Türme eines Windrades verwendet werden.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine schematische Schnittdarstellung einer Anordnung, die zwei über Flansche miteinander verschraubte doppelwandige Großrohre umfasst;
- Figur 2: eine schematische Schnittdarstellung zur Veranschaulichung unterschiedlicher Ausführungsbeispiele eines doppelwandigen Großrohrs;
- Figur 3: eine schematische Schnittdarstellung eines weiteren Ausführungsbeispiels eines doppelwandigen Großrohrs;
- Figur 4: eine schematische Schnittdarstellung eines spiralgeschweißten Stahlrohrs;
- Figur 5: eine schematische Darstellung eines Windrads; und
- Figur 6A bis 6C: weitere schematische Darstellungen des Windrads nach Figur 5, wobei die Figur 6C eine schematische Teildarstellung der Windlasten des Windrads nach Figur 6A in horizontaler Lage zeigt.

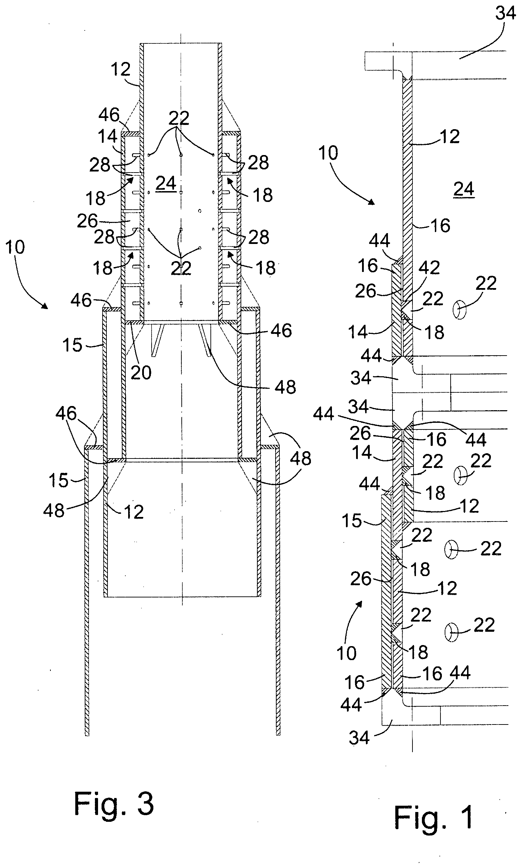

Bei der Anordnung nach Figur 1 sind ein oberes Großrohr 10 und ein unteres Großrohr 10 vorgesehen, wobei die beiden Großrohre 10 über zwei miteinander verschraubte Flansche 34 miteinander verbunden sind.

Das obere doppelwandige Großrohr 10 weist ein spiralgeschweißtes Stahlrohr als Innenrohr 12 und ein spiralgeschweißtes Stahlrohr als Außenrohr 14 auf.

Im Unterschied zu dem oberen doppelwandigen Großrohr 10 ist bei dem unteren doppelwandigen Großrohr 10 ein weiteres Außenrohr 15 vorgesehen, welches außerhalb des Außenrohrs 14 angeordnet ist, in welchem das Innenrohr 12 angeordnet ist. Es versteht sich, dass - ohne von dem Grundgedanken vorliegender Erfindung abweichen zu müssen - das Außenrohr 14 als Innenrohr in Bezug auf das Außenrohr 15 und das Innenrohr 12 als weiteres Innenrohr bezeichnet werden können.

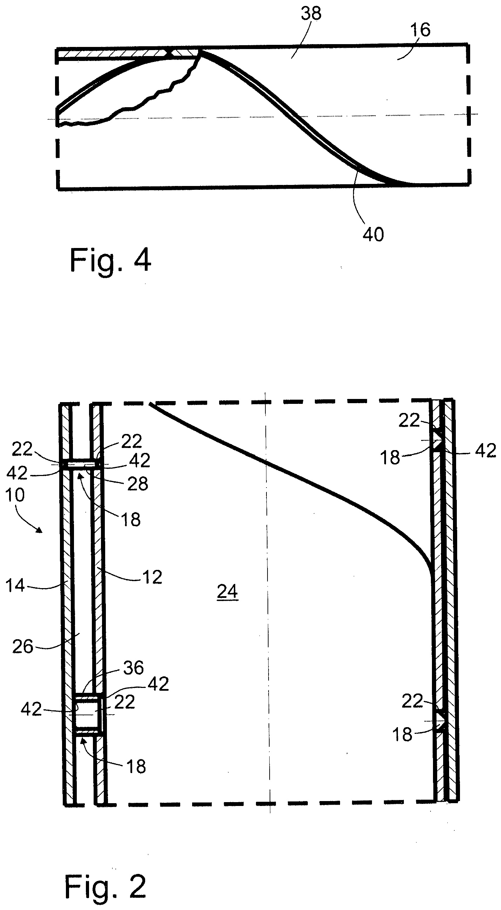

Jedes der spiralgeschweißten Stahlrohre 12, 14, 15 ist bei diesem Ausführungsbeispiel ein aus einem dickwandigen warmgewalzten Stahlband 16 spiralgeschweißtes Rohr. Die prinzipielle Ausbildung eines spiralgeschweißten Stahlrohrs 38 ist sehr schematisch in Figur 4 veranschaulicht. Das spiralgeschweißte Stahlrohr 38 nach Figur 4 besteht aus einem dickwandigen warmgewalzten Stahlband 16 mit einer spiralförmigen, durchgehenden Schweißnaht 40. Ggf. kann auch eine weitere derartige Schweißnaht vorgesehen sein.

Bei dem warmgewalzten Stahlband 16 des vorliegenden Ausführungsbeispiel handelt es sich um ein Stahlband 16 mit einer Dicke von 25,4 mm (1 in).

Zur eventuellen Verbindung mit weiteren Großwandrohren sind ferner jeweils oben und unten an den beiden Großrohren 10 weitere Flansche 34 vorgesehen.

Die Innenrohre 12 der beiden Großrohre 10 sind über mehrere entsprechend der vorliegenden Erfordernisse verteilte Schweißverbindungen 18 mit dem jeweiligen Außenrohr 14 verbunden, wobei in der Darstellung nach Figur 1 nur jeweils eine Schweißverbindung 18 und zwei entsprechende in Umfangrichtung aufeinander folgende Schweißöffnungen 22 veranschaulicht sind. Ebenso sind die beiden Außenrohre 14, 15 des unteren Großrohrs über mehrere entsprechend der vorliegenden Erfordernisse verteilte Schweißverbindungen 18 miteinander verbunden, wobei in Figur 1 hier jeweils zwei Schweißverbindungen 18 und jeweils zwei entsprechende in Umfangrichtung aufeinander folgende Schweißöffnungen 22 veranschaulicht sind. Beim Herstellen des obigen doppelwandigen Großrohrs 10 erfolgt das Schließen jeder Schweißverbindung 18 zwischen den Rohren 12, 14 und 15 jeweils über die Schweißöffnungen 22, so dass auf einfache und praktische Weise von dem Inneren 24 des jeweilig inneren Rohrs 12, 14 heraus jede Schweißverbindung 18 zwischen den Rohren 12, 14 und 15 geschlossen bzw. hergestellt werden kann.

Die unmittelbaren Schweißverbindungen 18 zwischen dem Innenrohr 12 und dem Außenrohr 14 bzw. zwischen dem Außenrohr 14 und dem weiteren Außenrohr 15 bei den doppelwandigen Großrohren 10 nach Figur 1 wurden jeweils unter Ausbildung einer Schweißverbindung 18 in Form einer umlaufenden Schweißnaht 42 (lediglich exemplarisch beziffert) vorgenommen, welche die jeweilige Schweißöffnung 22 in dem Innenrohr 12 bzw. Außenrohr 14 abdichtet, so dass vorteilhaft der zwischen dem Innenrohr 12 und dem Außenrohr 14 bzw. der zwischen dem Außenrohr 14 und dem weiteren Außenrohr 15 liegende Raum 26 bzw. Zwischenraum 26 abgedichtet ist.

Jede der Schweißverbindungen 18 an dem oberen doppelwandigen Großrohr 10 weist einen axialen Abstand zu der axialen Höhe des unteren Endes der beiden Enden des Innenrohrs 12 auf, der vorliegend größer ist als der zweifache Abstand zwischen dem Innenrohr 12 und dem Außenrohr 14. Ein entsprechender Abstand zu der axialen Höhe des oberen Endes der beiden Enden des Innenrohrs 12 ist auch bei dem unteren doppelwandigen Großrohr 10 für die Schweißverbindungen 18 zwischen Innenrohr 12 und Außenrohr 14 vorgesehen.

Bei der Herstellung des obigen doppelwandigen Großrohrs 10 nach Figur 1 wird zunächst ein spiralgeschweißtes Stahlrohr 38 aus einem dickwandigen warm gewalzten Stahlband - d.h. einem warm gewalzten Stahlband mit einer Dicke größer als 8 mm - spiralgeschweißt. Anschließend werden zwei dieser Rohre 38 mit einem unterschiedlichen Durchmessern ineinander gesteckt, so dass Innenrohr 12 und Außenrohr 14 sowie ggf. ein weiteres Außenrohr 15 bereitgestellt werden. Hiernach werden jeweils die beiden Rohre 12, 14, 15 über die Schweißverbindungen 18 miteinander verbunden. Zum Verbinden werden die beiden Rohre 12, 14, 15 - also das Innenrohr 12 und das Außenrohr 14 bzw. das Außenrohr 14 und das Außenrohr 15 - unmittelbar miteinander verschweißt, sodass sich eine stoffschlüssige Verbindung zwischen dem Innenrohr 12 und dem Außenrohr 14 bzw. zwischen dem Außenrohr 14 und dem Außenrohr 15 ausbilden kann, die sehr stabil ist. Zur Herstellung der Schweißverbindung bzw. zum Schließen der Schweißverbindung wird diese vom Inneren 24 heraus durch die Schweißöffnungen 22 auf einfache und praktische Weise geschlossen.

Auch werden die Flansche 34 jeweils an den Enden der hierdurch gebildeten Großrohre 10 mit den jeweils an den Enden vorhandenen Rohren 12, 14, 15 des Innenrohrs 12 und der Außenrohre 14, 15 verschweißt.

Bei der schematischen Schnittdarstellung zur Veranschaulichung unterschiedlicher Ausführungsbeispiele eines doppelwandigen Großrohrs 10 nach Figur 2 ist neben einer unmittelbaren Verschweißung von Innenrohr 12 und Außenrohr 14 mittels Schweißverbindungen 18 in Form umlaufender Schweißnähte - vergleiche in Figur 2 die Schweißverbindungen 18 rechts sowie das vorstehend beschriebene Ausführungsbeispiel - unter anderem eine Schweißverbindung 18 vorgesehen, die einen bolzenartigen Abstandhalter 28 aus Stahl umfasst, wobei der Abstandhalter 28 sowohl mit dem Innenrohr 12 als auch mit dem Außenrohr 14 jeweils durch eine Schweißnaht 42 verschweißt ist. Auch zur Herstellung dieser Schweißverbindung 18 ist eine Schweißöffnung 22 in dem Innenrohr 12 vorgesehen, so dass die Schweißverbindung 18 vom Inneren 24 des Innenrohrs 12 heraus durch die Schweißöffnung 22 geschlossen bzw. hergestellt werden kann, und zwar unter Verwendung einer geeigneten Schweißvorrichtung. Auch ist bei diesem Ausführungsbeispiel am Außenrohr jeweils eine Schweißöffnung 22 vorgesehen, so dass der Abstandhalter 28 auch von außen ohne weiteres mit dem Außenrohr 14 verschweißt werden kann. Diese Ausführungsform hat den Nachteil, dass auch außen Schweißstellen vorhanden sind, die einerseits sichtbar und andererseits ggf. einer Nachbehandlung, beispielsweise gegen Korrosion oder zu Verschönerungszwecken, bedürfen. In einer alternativen Ausführungsform können die Abstandhalter vor dem Ineinandersetzen der Rohre 12, 14 mit einem der Rohre 12, 14, beispielsweise mit dem Außenrohr 14, ohne entsprechende Schweißöffnungen verschweißt werden, um dann die Rohre 12, 14 ineinander zu setzen und dann durch Schweißöffnungen 22 die Abstandhalter 22 mit dem anderen der Rohre 12, 14 zu verschweißen.

Bei einer weiteren Verbindungsalternative (siehe Figur 2 links unten) zur Herstellung einer Schweißverbindung 18 zwischen Innenrohr 12 und Außenrohr 14 ist ein Rohrstück 36 aus Stahl als Abstandhalter vorgesehen, welches mit dem Innenrohr 12 derart verschweißt ist, dass ein Endabschnitt dieses Rohrstücks 36 in der Schweißöffnung 22 des Innenrohrs 12 aufgenommen und dort mittels einer umlaufenden Schweißnaht 42 verschweißt ist. Das dem Endabschnitt entgegengesetzte Ende des Rohrstücks 36 ist stirnseitig an das Außenrohr 14 mittels einer umlaufenden Schweißnaht 42 angeschweißt. Auf diese Weise dichten die Schweißnähte 42 den Zwischenraum 26 zwischen den beiden Rohren 12, 14 ab.

Auch bei dem doppelwandigen Großrohr 10 nach Figur 3 sind zur Herstellung von Schweißverbindungen 18 zwischen einem oberen Innenrohr 12 und einem oberen Außenrohr 14 eine Vielzahl an Abstandhaltern 28 aus Stahl aus Stahl vorgesehen, welche zwischen dem Innenrohr 12 und dem Außenrohr 14 angeordnet sind und welche sowohl mit dem Innenrohr 12 als auch mit dem Außenrohr 14 verschweißt sind, wobei die Herstellung der Schweißverbindungen 18 auch hier über Schweißöffnungen 22 in der bereits bei Figur 2 beschriebenen Art und Weise vorgenommen wurde.

Neben einer Schweißverbindung 20 an dem unteren Ende des oberen Innenrohres 12 sind die über die Abstandhalter 28 bereitgestellten Schweißverbindungen 18 auf unterschiedlichen axialen Höhen vorgesehen.

Das obere Innenrohr 12 und das obere Außenrohr 14 weisen eine unterschiedliche axiale Länge auf. Ferner ist bei dem doppelwandigen Großrohr 10 nach Figur 3 ein weiteres Außenrohr 15 außerhalb des oberen Außenrohrs 14 angeordnet, welches zugleich zur Erzielung einer teleskopartigen Ausbildung als Innenrohr 12 dient, welches mit einem Endabschnitt in einem zweiten äußersten Außenrohr 15 angeordnet ist. Auch hier können nach Bedarf Schweißverbindungen 18 zwischen den jeweiligen Innen- und Außenrohren 12, 14, 15 vorgesehen sein.

Es versteht sich, dass die Rohre 12, 14, 15 über Schweißnähte 44 (exemplarisch in Figur 1 beziffert) oder sogar über Endstücke, wie die Flansche 34 (siehe Figur 1) oder Abdeckungen 46 (siehe Figur 3) an ihren oberen und unteren Enden abgedichtet sein können. Auch versteht es sich, dass statt der Schweißnähte 42, 44 auch andere Schweißverbindungsarten vorgesehen sein können, wenn dieses vorteilhaft ist, wobei dann ggf. auf andere Dichtungsmechanismen, wie aushärtende Dichtungen, Dichtungsklappen, zurückgegriffen werden kann.

Ebenso ist es denkbar, die einzelnen Rohre 12, 14, 15 bzw. die unterschiedlichen Großrohre 10 noch durch Stabilisatoren 48 (in Figur 3 exemplarisch beziffert) untereinander zu stabilisieren.

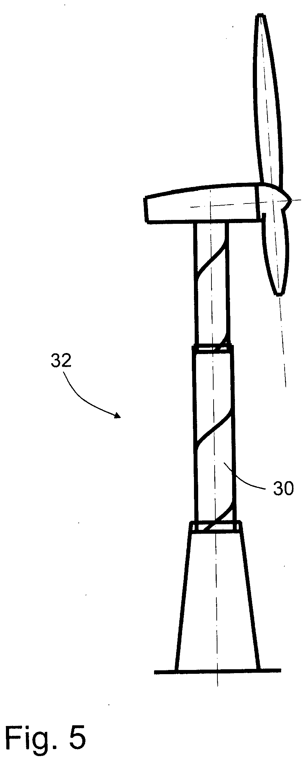

Das Windrad 32 nach Figur 5 weist einen Windradturm 30 auf, wobei für diesen ein spiralgeschweißtes Stahlgroßrohr verwendet wird, wobei der Windradturm 30 ein spiralgeschweißtes Stahlgroßrohr umfasst bzw. wobei der Windradturm 30 in Form eines spiralgeschweißten Stahlgroßrohres ausgebildet ist.

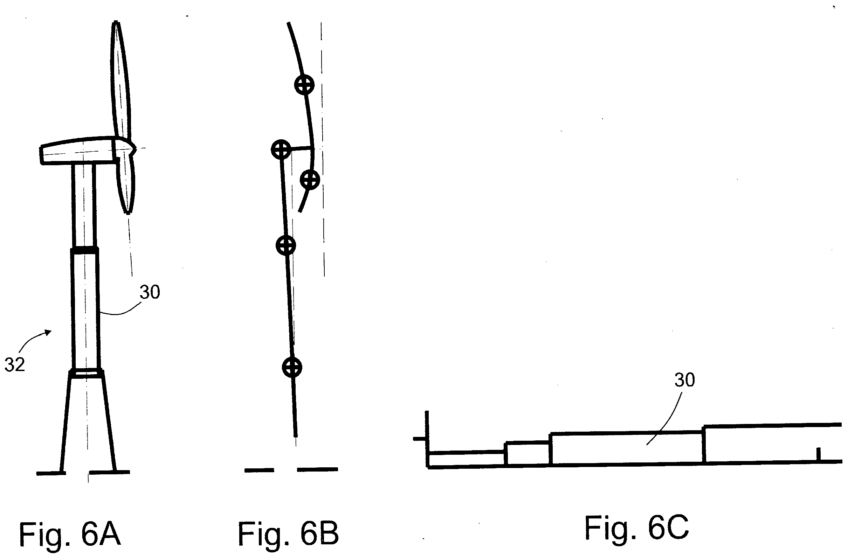

Bei den schematischen Darstellungen des Windrades 32 nach Figur 5 veranschaulicht die Darstellung nach Figur 6B kreisförmige Bereiche, an denen eine Berechnung eines an diesen Bereichen zu erwartenden Staudrucks vorgenommen werden kann. Die Berechnung des Staudrucks an diesen Bereichen dient als Grundlage für die Auslegung der Bauweise bzw. Geometrie des Windrades, wobei die horizontale Anordnung nach Figur 6C ergänzend als Hilfsmittel zur Auslegung der Geometrie bzw. der Bauweise des Windrades 32 herangezogen werden kann.

Es versteht sich, dass statt entsprechend der oben stehenden Überlegungen insbesondere im oberen Bereich des Windradturms 30 ein einfaches spiralgeschweißtes Großrohr bzw. ein doppelwandiges spiralgeschweißtes Großrohr, bei dem die Doppelwandung nur im unteren Bereich zu finden ist, ähnlich wie es in den Figuren 1 und 3 angedeutet ist, zur Anwendung kommen kann. Alternativ bzw. kumulativ ist es denkbar, ein sich verjüngendes doppelwandiges spiralgeschweißtes Großrohr als Windradturm 30 zu nutzen.

**Bezugszeichenliste:**

| | | | |
|---|---|---|---|
| 10 | Großrohr | 30 | Windradturm |
| 12 | Innenrohr | 32 | Windrad |
| 14 | Außenrohr | 34 | Flansch |
| 15 | Außenrohr | 36 | Rohrstück |
| 16 | Stahlband | 38 | spiralgeschweißtes Stahlrohr |
| 18 | Schweißverbindung | 40 | Schweißnaht |
| 20 | Schweißverbindung Ende Innenrohr | 42 | Schweißnaht |
| 22 | Schweißöffnung | 44 | Schweißnaht |
| 24 | Innere des Innenrohrs | 46 | Abdeckung |
| 26 | Zwischenraum | 48 | Stabilisator |
| 28 | Abstandhalter | | |

## Patentansprüche

1. Doppelwandiges Großrohr (10) mit wenigstens einem spiralgeschweißten Stahlrohr als Innenrohr (12) und/oder als Außenrohr (14), wobei das spiralgeschweißte Stahlrohr ein aus einem dickwandigen warmgewalzten Stahlband (16) spiralgeschweißtes Rohr ist, wobei das Innenrohr (12) und das Außenrohr (14) über wenigstens eine Schweißverbindung (18) miteinander verbunden sind, **gekennzeichnet durch** eine Dicke des Stahlbandes größer als 8 mm und wenigstens eine Schweißöffnung (22) in dem Innenrohr (12) und/oder in dem Außenrohr (14).

2. Doppelwandiges Großrohr (10) nach Anspruch 1, **dadurch gekennzeichnet, dass** die Schweißverbindung (18) über die Schweißöffnung (22) bzw. durch die Schweißöffnung (22) hindurch geschlossen, hergestellt und/oder zugänglich ist.

3. Doppelwandiges Großrohr (10) nach Anspruch 1 oder 2, **dadurch gekennzeichnet, dass**, die Schweißöffnung (22) abgedichtet ist, vorzugsweise zwischen dem Inneren (24) des Innenrohrs (12) und dem zwischen Innenrohr (12) und Außenrohr (14) liegenden Raum (26) abgedichtet ist.

4. Doppelwandiges Großrohr (10) nach einem der Ansprüche 1 bis 3, **dadurch gekennzeichnet, dass** zwischen dem Innenrohr (12) und dem Außenrohr (14) eine Vielzahl an Abstandhaltern (28), vorzugsweise aus Stahl, angeordnet sind, die sowohl mit dem Innenrohr (12) als auch mit dem Außenrohr (14) verschweißt sind.

5. Doppelwandiges Großrohr (10) nach einem der Ansprüche 1 bis 4, **dadurch gekennzeichnet, dass** sowohl das Innenrohr (12) als auch das Außenrohr (14) ein spiralgeschweißtes Stahlrohr sind.

6. Doppelwandiges Großrohr (10) nach einem der Ansprüche 1 bis 5, **dadurch gekennzeichnet, dass** die Schweißverbindung (18) einen axialen Abstand zu einem der beiden Enden des Innenrohres (12) aufweist, der wenigstens dem 0,1-fachen der Länge des Innenrohrs (12) und/oder der wenigstens dem zweifachen Abstand zwischen Innenrohr (12) und Außenrohr (14) entspricht.

7. Doppelwandiges Großrohr (10) nach einem der Ansprüche 1 bis 6, **dadurch gekennzeichnet, dass** neben etwaigen Schweißverbindungen (20) an den Enden des Innenrohres auf unterschiedlichen axialen Höhen mehrere Schweißverbindungen (18) vorgesehen sind.

8. Doppelwandiges Großrohr (10) nach einem der Ansprüche 1 bis 7, **dadurch gekennzeichnet, dass** das Innenrohr (12) und das Außenrohr (14) miteinander verschweißt sind.

9. Doppelwandiges Großrohr (10) nach einem der Ansprüche 1 bis 8, **dadurch gekennzeichnet, dass** das Innenrohr (12) und das Außenrohr (14) eine Wandstärke zwischen 10,0 mm und 30,0 mm, vorzugsweise zwischen 11,0 mm und 28 mm, insbesondere zwischen 12,0 mm und 26,0 mm, aufweisen.

10. Verwendung eines doppelwandigen Großrohrs (10) nach einem der Ansprüche 1 bis 9 für Windradtürme (30), Piling-Rohre und/oder Brückenrohre.

11. Verfahren zur Herstellung eines doppelwandigen Großrohrs (10), wobei zunächst ein Rohr (12) aus einem dickwandigen warmgewalzten Stahlband, d.h. einem warmgewalzten Stahlband mit einer Dicke größer als 8,0 mm, spiralgeschweißt wird, anschließend dieses Rohr (12) und ein weiteres Rohr (14) mit einem anderen Durchmesser ineinander gesteckt und hiernach die beiden Rohre (12, 14) verbunden werden, **dadurch gekennzeichnet, dass** die beiden Rohre (12, 14) über eine Schweißverbindung (18) miteinander verbunden werden und mit wenigstens einer Schweißöffnung (22) in dem Innenrohr (12) und/oder in dem Außenrohr (14).

12. Verfahren nach Anspruch 11, **dadurch gekennzeichnet, dass** die beiden Rohre (12, 14) unmittelbar miteinander verschweißt werden.

13. Verfahren nach Anspruch 11 oder 12, **dadurch gekennzeichnet, dass** die Schweißverbindung vom Inneren (24) des Innenrohrs (12) heraus durch Schweißöffnungen (22) geschlossen wird.

14. Verfahren nach einem der Ansprüche 11 bis 13, **dadurch gekennzeichnet, dass** zumindest eines der Rohre (12, 14) vor dem Verbinden der Rohre (12, 14), vorzugsweise sogar vor dem Ineinanderstecken, an seiner dem anderen Rohr (12, 14) zugewandten Seite gegen Korrosion geschützt wird.

## Claims

1. A double-walled large pipe (10) with at least one spiral-welded steel pipe as inner pipe (12) and/or as outer pipe (14), wherein the spiral-welded steel pipe is a pipe that has been spiral-welded from a thick-walled hot-rolled steel strip (16), wherein the inner pipe (12) and the outer pipe (14) are connected to one another via at least one welded connection (18), **characterized by** a thickness of the steel strip greater than 8 mm and at least one welding aperture (22) in the inner pipe (12) and/or in the outer pipe (14).

2. The double-walled large pipe (10) according to Claim 1, **characterized in that** the welded connection (18) is closed, manufactured and/or accessible via the welding aperture (22) or through the welding aperture (22).

3. The double-walled large pipe (10) according to Claim 1 or 2, **characterized in that** the welding aperture (22) is sealed, preferentially sealed between the interior (24) of the inner pipe (12) and the space (26) located between the inner pipe (12) and outer pipe (14).

4. The double-walled large pipe (10) according to any one of the Claims 1 to 3, **characterized in that** between the inner pipe (12) and the outer pipe (14) a multiplicity of spacers (28), preferentially made of steel, are arranged, which are welded both to the inner pipe (12) and also to the outer pipe (14).

5. The double-walled large pipe (10) according to any one of the Claims 1 to 4, **characterized in that** both the inner pipe (12) and also the outer pipe (14) are a spiral-welded steel pipe.

6. The double-walled large pipe (10) according to any one of the Claims 1 to 5, **characterized in that** the welded connection (18) has an axial distance to one of the two ends of the inner pipe (12) which corresponds at least 0.1 times the length of the inner pipe (12) and/or at least to twice the distance between inner pipe (12) and outer pipe (14).

7. The double-walled large pipe (10) according to any one of the Claims 1 to 6, **characterized in that** beside any welded connections (20) at the ends of the inner pipe a plurality of welded connections (18) at different axial heights are provided.

8. The double-walled large pipe (10) according to any one of the Claims 1 to 7, **characterized in that** the inner pipe (12) and the outer pipe (14) are welded to one another.

9. The double-walled large pipe (10) according to any one of the Claims 1 to 8, **characterized in that** the inner pipe (12) and the outer pipe (14) have a wall thickness between 10.0 mm and 30.0 mm, preferentially between 11.0 mm and 28 mm, in particular between 12.0 mm and 26.0 mm.

10. Use of a double-walled large pipe (10) according to any one of the Claims 1 to 9 for wind turbine towers (30), piling tubes and/or bridge tubes.

11. A method for manufacturing a double-walled large pipe (10), wherein initially a pipe (12) is spiral-welded from a thick-walled hot-rolled steel strip, i.e. a hot-rolled steel strip with a thickness greater than 8.0 mm, subsequently this pipe (12) and a further pipe (14) with a different diameter are inserted into one another and thereafter the two pipes (12, 14) are connected, **characterized in that** the two pipes (12, 14) are connected to one another via a welded connection (18) and with at least one welding aperture (22) in the inner pipe (12) and/or in the outer pipe (14).

12. The method according to Claim 11, **characterized in that** the two pipes (12, 14) are directly welded to one another.

13. The method according to Claim 11 or 12, **characterized in that** the welded connection is closed from the interior (24) of the inner pipe (12) through welding apertures (22).

14. The method according to any one of the Claims 11 to 13, **characterized in that** at least one of the pipes (12, 14) prior to the connecting of the pipes (12, 14), preferentially even prior to the inserting into one another, is protected against corrosion on its side facing the other pipe (12, 14).

## Revendications

1. Grand tube à double paroi (10) comportant au moins un tube d'acier soudé en spirale comme tube intérieur (12) et/ou comme tube extérieure (14), dans lequel le tube d'acier soudé en spirale est un tube soudé en spirale formé à partir d'une bande d'acier (16) à paroi épaisse laminée à chaud, dans lequel le tube intérieur (12) et le tube extérieur (14) sont reliés l'un à l'autre par l'intermédiaire d'au moins une liaison de soudure (18), **caractérisé par** une épaisseur de la bande d'acier plus grande que 8 mm et ai moins une ouverture de soudure (22) dans le tube intérieur (12) et/ou dans le tube extérieur (14).

2. Grand tube à double paroi (10) selon la revendication 1, **caractérisé en ce que** la liaison de soudure est fermée, fabriquée et/ou accessible par l'intermédiaire de l'ouverture de soudure (22), resp. l'ouverture de soudure (22).

3. Grand tube à double paroi (10) selon la revendication 1 ou 2, **caractérisé en ce que** l'ouverture de soudure (22) est isolée de manière étanche, de préférence entre l'intérieur (24) du tube intérieur (12) et l'espace (26) situé entre le tube intérieur (12) et le tube extérieur (14).

4. Grand tube à double paroi (10) selon une des revendications 1 à 3, **caractérisé en ce que** entre le tube intérieur (12) et le tube extérieur (14) une pluralité d'écarteurs (28), de préférence en acier, sont disposés, qui sont soudés tant avec le tube intérieur (12) qu'avec le tube extérieur (14).

5. Grand tube à double paroi (10) selon une des revendications 1 à 4, **caractérisé en ce que** tant le tube intérieur (12) que le tube extérieur (14) sont un tube d'acier soudé en spirale.

6. Grand tube à double paroi (10) selon une des revendications 1 à 5, **caractérisé en ce que** la liaison de soudure (18)présente un espacement axial par rapport à une des deux extrémités du tube intérieur (12), qui correspond au moins à 0,1 fois la longueur du tube intérieur (12) et/ou au moins au double de l'espacement entre le tube intérieur (12) et le tube extérieur (14).

7. Grand tube à double paroi (10) selon une des revendications 1 à 6, **caractérisé en ce que** à côté de n'importe quelles liaisons de soudure (20) sur les extrémités du tube intérieur sur différentes hauteurs axiales, plusieurs liaisons de soudure (18) sont prévues.

8. Grand tube à double paroi (10) selon une des revendications 1 à 7, **caractérisé en ce que** le tube intérieur (12) et le tube extérieur (14) sont soudés l'un à l'autre.

9. Grand tube à double paroi (10) selon une des revendications 1 à 8, **caractérisé en ce que** le tube intérieur (12) et le tube extérieur (14) présentent une épaisseur de paroi comprise entre 10,1 mm et 30,0 mm, de préférence entre 11,0 mm et 28 mm, notamment entre 12,0 mm et 26,0 mm.

10. Utilisation d'un grand tube à double paroi (10) selon une des revendications 1 à 9 pour des pylônes d'éoliennes, tubes pour pilotis et/ou tubes pour ponts.

11. Procédé de fabrication d'un grand tube à double paroi (10), dans lequel tout d'abord un tube (12) constitué d'une bande d'acier à paroi épaisse laminée à chaud, c'est-à-dire une bande d'acier laminée à chaud avec une épaisseur plus grande que 8,0 mm, est soudée en spirale, ensuite un tube (12) et un tube supplémentaire (14) avec un autre diamètre sont enfichés l'un dans l'autre, après quoi les deux tubes (12,14) sont reliés, **caractérisé en ce que** les deux tubes (12,14) sont reliés l'un à l'autre par une liaison de soudure (18) et avec au moins une ouverture de soudure (22) dans le tube intérieur (12) et/ou dans le tube extérieur (14).

12. Procédé selon la revendication 11, **caractérisé en ce que** les deux tubes (12,14) sont directement soudés l'un à l'autre.

13. Procédé selon la revendication 11 ou 12, **caractérisé en ce que** la liaison de soudure est fermée de l'intérieur (24) du tube intérieur (12) vers l'extérieur par des ouvertures de soudure (22).

14. Procédé selon une des revendications 11 à 13, **caractérisé en ce que** au moins un des tubes (12,14) avant la liaison des tubes (12,14), de préférence avant même l'enfichage, est protégé contre la corrosion sur son côté tourné vers l'autre tube (12, 14).
